# EUROPÄISCHE PATENTSCHRIFT

(11) **EP 2 093 725 B1**
(45) Veröffentlichungstag und Bekanntmachung des Hinweises auf die Patenterteilung: **14.12.2011**
(21) Anmeldenummer: 08101797.2
(22) Anmeldetag: 20.02.2008
(51) Int. Cl.: G08B 5/36, G09F 13/22, F16P 3/14, G01V 8/10

(54) **Überwachung mit einem Sensorelement**
Monitoring with a sensor element
Surveillance à l'aide d'un élément de capteur

(43) Veröffentlichungstag der Anmeldung: 26.08.2009
(73) Patentinhaber: SICK AG, 79183 Waldkirch (DE)
(72) Erfinder: Wüstefeld, Martin, 79350 Sexau (DE)
(74) Vertreter: Hehl, Ulrich

(56) Entgegenhaltungen:
- EP-A- 1 788 535
- EP-A2- 1 306 603
- EP-B1- 1 518 073
- DE-A1- 10 345 197
- DE-A1- 10 355 023
- DE-A1- 19 938 639
- DE-A1-102005 011 143
- DE-U1-202004 012 836
- DE-U1-202006 015 495
- DE-U1-202006 018 787
- US-A- 4 514 725

## Beschreibung

Die Erfindung betrifft eine Vorrichtung zur Überwachung mit einem Sensorelement und ein Sicherheitsverfahren zur Erkennung eines Eingriffs in einen Überwachungsbereich nach dem Oberbegriff von Anspruch 1 beziehungsweise 9.

Sensoren jeder Art besitzen üblicherweise eine Anzeige, um Messwerte oder einen Status anzuzeigen. So kann etwa an einem Überwachungssensor eine LCD-Anzeige oder eine Reihe von LEDs vorgesehen sein, welche Meldungen über den Zustand des Sensors oder des Überwachungsbereichs einem Benutzer sichtbar machen. Sie dienen also der Visualisierung des Betriebszustandes oder werden zur Diagnoseunterstützung verwendet. Allerdings sind Sensoren häufig an Stellen verbaut, die nicht leicht zugänglich sind und somit sind die Sensorinformationen für einen Benutzer nicht leicht erkennbar, vor allem, wenn die Sensoren oder auch nur ihre integrierten Anzeigen relativ klein sind.

Bekannt ist daher auch, für bessere Sichtbarkeit Leuchtmelder anzubauen oder räumlich unabhängige Leuchtmelder mit LEDs oder Lampen zu verwenden. Solche Leuchtmelder verursachen Zusatzkosten in Entwicklung und Herstellung, bedürfen entsprechender Montagevorrichtungen und lassen sich auch nur bedingt an vorliegende Montagebedingungen anpassen.

Eine besonders wichtige Information über einen Sensor besteht in der Sicherheitstechnik darin, diejenigen Bereiche zu kennen, welche von dem Sensor gegen unberechtigte oder gefährliche Eingriffe durch Personen oder auch Maschinen jeder Art geschützt werden. Solche Schutzbereiche umgeben eine Gefahrenquelle, etwa eine gefährliche Maschine wie eine Presse oder einen Roboter und der Sensor gibt bei Erkennung eines unzulässigen Eingriffs in den Schutzbereich ein Signal aus, welches die Gefahrenquelle absichert. Dies kann durch Abschaltung oder anderweitige Verbringung in einen sicheren Zustand geschehen, wie etwa das Einschwenken einer Schutzvorrichtung.

Die herkömmlich am häufigsten angewandte Methode, die Gefahrenquelle umgebende Schutzbereiche oder Schutzfelder zu kennzeichnen, besteht darin, die Grenzen mit einem gelb-schwarzen Band abzukleben. Dabei tritt aber in der Praxis ein Gewöhnungseffekt auf und das Band sticht Bedienpersonal nicht mehr ins Auge. Nach dieser Gewöhnungsphase kommt es also doch wieder zu unbeabsichtigten Übergriffen über die Schutzfeldgrenzen.

Dem eigentlichen Schutzbereich, bei dem auf einen Eingriff hin die sicherheitsgerichtete Abschaltung erfolgt, ist häufig noch ein Warnbereich vorgelagert, der bereits nicht mehr betreten werden soll, aber noch nicht unmittelbar zu einer Gefährdung führt. Dazu können Lautsprecher zur Signalisierung bei Betreten eines Warnbereichs verwendet werden, die jedoch vom Personal als ausgesprochen störend empfunden werden. Dieses Empfinden geht oft so weit, dass versucht wird, die Lautsprecher abzuschalten oder anderweitig unwirksam zu machen.

Da jeder versehentliche Eingriff in einen Schutzbereich durch Ausfallzeiten Kosten verursacht, werden auch physische Schutzabtrennungen eingesetzt, welche zwar das Personal wirksam vom Schutzbereich abhalten, gegenüber einer Absicherung mittels Sensoren aber sperrig, unflexibel und für viele Arbeitsgänge behindernd sind. Eine Ablösung durch eine sensorbasierte Lösung wird daher oftmals nur in Betracht gezogen, wenn dabei auch das Problem des unbeabsichtigten Eintretens und die Aufrechterhaltung ungestörter Maschinenprozesse beherrscht wird.

Aus der EP 1 518 073 B1 ist eine berührungslos wirkende Schutzeinrichtung bekannt, deren Gehäuse selbst das optische Anzeigeelement bildet. Dazu kann es beispielsweise aus einem optisch aktiven Kunststoff bestehen. Nachteilig hieran ist, dass dieses durch das Gehäuse gebildete Anzeigeelement natürlich fest an den Ort des Sensors gebunden bleibt. Wenn der Sensor also an einer schlecht oder nicht einsehbaren Stelle montiert ist, kann auch diese Anzeige nicht gesehen werden. Zudem ist es nicht möglich, bestehende Sensoren umzurüsten, da ein Austausch des Gehäuses in seinem Aufwand nahezu der Neuherstellung eines Sensors gleichkommt. Schließlich ist es aufwändig, Form und Kontur der leuchtenden Bereiche anzupassen und zumindest ist dies nur bei der Herstellung des Gehäuses und nicht mehr bei der Montage möglich.

Aus der DE 199 38 639 B4 ist eine Vorrichtung zur Absicherung eines Gefahrenbereichs bekannt, welche auf einer Kamera basiert, die einen Reflektorstreifen beobachtet. Dieser Reflektorstreifen oder die Sichtebene von Kamera zu Reflektorstreifen bildet dabei also eine Grenze des Schutzbereichs. Der Reflektorstreifen wird von einer aktiven Beleuchtung der Kamera angeleuchtet, damit diese Grenze besser erkennbar ist. In einer besonderen Ausführungsform kann statt des angeleuchteten Reflektorstreifens eine aktiv leuchtende Folie eingesetzt werden. Diese aktiv leuchtende Folie bildet dabei also effektiv den Sender und die Kamera den Empfänger einer optoelektronischen Schutzvorrichtung. Daher ist es nicht möglich, den Streifen für irgendwelche Anzeigen zu verwenden, denn er muss ständig aktiv leuchtend bleiben, damit die Kamera ihre Schutzfunktion ausüben kann. Der zu dem gelb-schwarzem Klebeband beschriebene Gewöhnungseffekt tritt demnach wegen des immer konstanten Reizes für das Auge des Bedienpersonals auch hier auf.

Aus der DE 10 2006 013 834 A1 sind elektrolumineszierende Haftklebemassen bekannt, mit denen Klebebänder ausgerüstet werden können. Durch Anlegen einer Spannung können diese Klebebänder zum Leuchten angeregt werden. Die Klebemasse kann bei Anzeigeelementen beispielsweise von Mobiltelefonen, PDAs, Computern oder Monitoren verwendet werden, wo sie zugleich eine Hintergrundbeleuchtung und eine Klebeverbindung für das Anzeigeelement schafft. Ein anderes Einsatzgebiet ist die Verklebung von Notbeleuchtungssystemen und Hinweisschildern in öffentlichen Gebäuden, Krankenhäusern oder Flugzeugen. Eine Zusammenwirkung mit Sensoren ist nicht genannt. Indem Displays unmittelbar mit der Haftklebemasse in das Gerät eingepasst werden, wird auch die Sichtbarkeit gegenüber herkömmlichen Anzeigeelementen nicht erhöht.

Aus der US 4,514,725 ist bekannt, eine Jalousie mit elektrolumineszenten Streifen zu versehen. Wenn ein Mikrophon den Wamton eines Rauchmelders oder einer üblichen Alarmanlage gegen Einbrecher aufnimmt, werden die Streifen zum Leuchten gebracht, um zusätzlich zu dem Warnton auch optisch nach außen hin auf die Notsituation aufmerksam zu machen.

Die DE 20 2004 012 836 U1 offenbart eine Standortanzeige für Feuerlöscheinrichtungen mittels Leuchtfolien, die ihr Leuchtverhalten zum verbesserten Auffinden des Feuerlöschers abhängig von einer Signalgabe ändern. Das auslösende Signal wird drahtgebunden oder drahtlos beispielsweise von einem Rauchsensor, einem akustischen Sensor, einem Wärmesensor oder einem CO₂-Sensor gegeben.

Die DE 20 2006 015 495 U1 beschreibt eine Lumineszenz-Einheit mit einem wärme-, licht-, druck- oder beschleunigungssensitiven Sensor, der das Leuchten aktiviert oder deaktiviert. Eine Vielzahl von Formen, Farben und Aktivierungsmustern sind offenbart.

In der DE 103 55 023 A1 wird ein Fahrzeug mit optisch aktiven Flächensegmenten versehen. Diese sind abhängig von einer Mischung von unterschiedlichen Sensordaten ansteuerbar und reagieren beispielsweise auf Temperatur, Nebel, Staumeldungen oder das Annähern einer Person an ein parkendes Auto.

Aus der DE 20 2006 018 787 U1 ist ein Hinweisschild mit Elektrolumineszenz-Schichten versehenen beleuchteten Bereichen bekannt, die unabhängig voneinander ansteuerbar sind, um verschiedene leuchtende Symbole zu bilden.

Die DE 10 2005 011 143 A1 offenbart eine Kamera zum Steuern wenigstens einer sicherheitsrelevanten Funtkion eines Roboters oder einer Werkzeugmaschine. Bei Eingriff eines unzulässigen Objekts in einen Sicherheitsbereich wird die sicherheitsrelevante Funktion ausgelöst. Die Kontur des Sicherheitsbereichs ist in Abhängigkeit von Bewegungen des Roboters oder der Werkzeugmaschine veränderbar.

In der EP 1 306 603 A2 wird ein Sicherheitsabstand zwischen einem Objekt und einer Maschine mittels einer Sicherheitsgrenze zu einem Gefahrenbereich überwacht, um bei Eindringen des Objekts in den Gefahrenbereich eine sicherheitsrelevante Funktion auszulösen. Die Sicherheitsgrenze ist in Abhängigkeit von Position, Bewegungsrichtung und/oder Bewegungsgeschwindigkeit des Objekts variabel festlegbar.

Daher ist Aufgabe der Erfindung, ein System zur Überwachung anzugeben, dessen Sensorelement in der Lage ist, eine deutlich sichtbare Anzeige zu erzeugen.

Diese Aufgabe wird durch eine Vorrichtung nach Anspruch 1, ein Sicherheitsverfahren nach Anspruch 9 und ein Herstellungsverfahren nach Anspruch 12 gelöst.

Indem erfindungsgemäß Leuchtfolie das Anzeigeelement bildet und ihre Aktivität von dem Sensorelement steuerbar ist, besteht für das Sensorelement die Möglichkeit, Informationen auf einer nahezu beliebig formbaren und überall leicht anbringbaren Anzeige darzustellen. Somit kann das Sensorelement unabhängig von der Sichtbarkeit seiner Anzeigeelemente auch an unzugänglichen Orten montiert werden. Totzonen, in denen ein herkömmliches Anzeigeelement den aktiven Bereich des Sensors verdecken würde, können vermieden werden. Das erfindungsgemäße Anzeigeelement, nämlich die Leuchtfolie, kann leicht an jede Umgebung angepasst und dort montiert werden, indem es nämlich beispielsweise einfach mit einer Schere auf die gewünschte Form zurechtgeschnitten und aufgeklebt wird. Diese Leuchtfolie kann auch eine ästhetische Wirkung erzielen, auf sich aufmerksam machen oder ein Werbeträger sein, etwa als Logo ausgestaltet oder damit versehen. Sie ist aus jeder Richtung gut erkennbar, und da das Sensorelement den Aktivitätszustand ändern kann, kann Gewöhnungseffekten entgegengewirkt werden.

Die Leuchtfolie ist vorteilhafterweise unabhängig vom Ort des Sensorelements angebracht, insbesondere mit einer Klebeschicht versehen, wenn die Anzeige von Standorten, aus Blickwinkeln oder Entfernungen erkannt werden soll, von denen aus das Sensorelement selbst nicht oder nicht ausreichend sichtbar ist.

Das Sensorelement weist bevorzugt eine Sensorschnittstelle zur Ansteuerung der Leuchtfolie und die Leuchtfolie eine Leuchtfolienschnittstelle zum Empfang einer Ansteuerung von dem Sensorelement auf, wobei die Schnittstellen Ein- und Ausgänge für eine direkte Verbindung oder Schnittstellen für eine drahtlose Kommunikation sind, insbesondere nach dem Bluetooth-, Firewire-, GSM-, WLAN- oder UMTS-Standard. Eine direkte Verbindung über Ausgänge durch eine einfache Leitung oder bei Bedarf auch eine Netz- oder Busanbindung ist zumeist kostengünstiger, bedarf aber einer räumlichen Nähe und einer möglicherweise störenden physischen Verbindung. Drahtlose Kommunikationsschnittstellen geben dagegen völlige Flexibilität und ermöglichen eine besonders einfache Montage des Anzeigeelements, denn die Leuchtfolie muss weiterhin einfach aufgeklebt werden, ohne sich um eine Verbindung kümmern zu müssen.

Die Leuchtfolie weist bevorzugt elektrolumineszierendes Material auf, oder sie weist photolumineszierendes Material auf, insbesondere UV-aktivierbar, wobei die Vorrichtung eine Lichtquelle zur Aktivierung der Photolumineszenz aufweist. Derartige Leuchtfolien sind einsatzfertig und kostengünstig erhältlich. Eine photolumineszierende Folie ist noch etwas kostengünstiger und dem Anwender kann nicht der Fehler unterlaufen, beim Zurechtschneiden versehentlich die Anschlussstellen zu beschädigen oder zu entfernen. Dafür muss allerdings eine zusätzliche Lichtquelle, meist eine UV-Lichtquelle, zur Beleuchtung der photolumineszierenden Folie angebracht werden, welche mit dem Sensorelement verbunden ist, damit das Sensorelement die Folie zum Leuchten bringen kann. Eine direkte Deaktivierung ist nur bei der elektrolumineszierenden Folie möglich, da die Photolumineszenz zunächst von selbst abklingen muss.

Eine Auswertungseinheit des Sensorelements ist bevorzugt dafür ausgebildet, die Statusinformation über die Leuchtfolie durch deren partielle oder vollständige Aktivierung, Deaktivierung oder einen Farbwechsel auszugeben. Dies sind verschiedene Möglichkeiten, den Benutzer je nach Anforderung mehr oder weniger deutlich auf eine Ausgabe des Sensorelements aufmerksam zu machen.

Dabei ist die Auswertungseinheit besonders bevorzugt insbesondere für eine eindringlichere Ausgabe einer Statusinformation dafür ausgebildet, die Leuchtfolie dynamisch zu aktivieren, insbesondere durch eine Blinksequenz, mehrere Farbwechsel und/oder Erzeugung wechselnder Muster mittels Aktivierung von Teilbereichen oder mehreren Leuchtfolien. Damit können Signale betont werden, welche vom Personal eine wichtige oder sofortige Reaktion erfordern. Dies könnte ein drohender Brand sein, die Warnung vor einem Diebstahl oder eine Wartungsanforderung, mit welcher der Sensor anzeigt, dass er derzeit oder in nahe Zukunft nicht oder nicht mehr vollständig einsatzfähig ist.

Erfindungsgemäß ist das Sensorelement dafür ausgebildet, als Statusinformation die Verletzung eines definierten, dem Schutzbereich vorgelagerten Warnfeldes zu erkennen und auszugeben, um Personen davor zu warnen, in den Schutzbereich einzugreifen, wobei die Leuchtfolie an einer Grenze des Schutzbereichs angebracht ist, und wobei in dem Schutzbereich eine abzusichernde Gefahrenquelle angeordnet ist. Die Vorrichtung kann damit ein dynamisches Signal erzeugen, um Personal vor einem Eindringen in den Schutzbereich wirkungsvoll zu warnen. Dadurch können unnötige Ausfallzeiten verhindert werden. Da das Signal dynamisch ist, je nach Situation in unterschiedlicher Intensität und nur bei einem tatsächlich drohenden Eingriff in das Schutzfeld ausgegeben werden kann, tritt auch nicht der einleitend beschriebene nachteilige Gewöhnungseffekt ein. Schließlich wird eine optische Warnung durch die Leuchtfolie vom Personal als deutlich weniger störend empfunden als das aufdringliche Heulen einer Sirene, so dass weniger Anreiz besteht, die Warnfunktion zu unterlaufen und zur Vermeidung des störenden Signals außer Gefecht zu setzen.

In Weiterbildung weist die Vorrichtung vorteilhafterweise zusätzlich zu der Leuchtfolie mindestens ein weiteres Anzeigeelement auf, über welches redundant oder alternativ Statusinformationen und/oder Messwerte ausgegeben werden können. Beispielsweise kann ein herkömmlicher Sensor verwendet werden, an den zusätzlich eine Leuchtfolie angeschlossen wird. Die üblichen Bedien- und Anzeigeelemente bleiben dabei erhalten. Andererseits gibt es Statusinformationen und insbesondere Messdaten, deren Informationsdichte sich weniger zur Anzeige per Leuchtfolie eignet.

Die Vorrichtung ist bevorzugt eine insbesondere optische oder optoelektronische berührungslos wirkende Schutzeinrichtung wie ein Lichtgitter, ein Laserscanner oder eine Sicherheitskamera. Gerade solche Sensoren werden in bestehende oder durch ihre Funktionalität bestimmte Systeme eingebaut, nach- oder umgerüstet und müssen sich flexibel an die Gegebenheiten anpassen können. Zudem dürfen gerade sicherheitsrelevante Statusinformationen nicht übersehen werden, weil dies die Gesundheit von Bedienpersonal gefährden oder zumindest zu teuren Ausfallzeiten führen würde.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein nicht-erfindungsgemäßes Beispiel mit einem Lichtgitter, einer an dessen Gehäu- se angebrachten elektrolumineszierenden Leuchtfolie und einer im Abstand an einer Wand montierten photolumineszierenden Leuchtfolie;
- Fig. 2: eine erste Ausführungsform der Erfindung mit einer 2D- Sicherheitskamera, welche seitlich eines Arbeitsbereichs eines Roboters angebracht ist;
- Fig. 3: eine zweite Ausführungsform der Erfindung mit einer dreidimensionalen Ste- reoskopiekamera, welche einen Arbeitsbereich eines Roboters aus der Vo- gelperspektive überwacht; und
- Fig. 4: eine dritte Ausführungsform der Erfindung mit einem Bewegungsmelder oder einem Scanner zur Überwachung und automatischen Öffnung einer Tür.

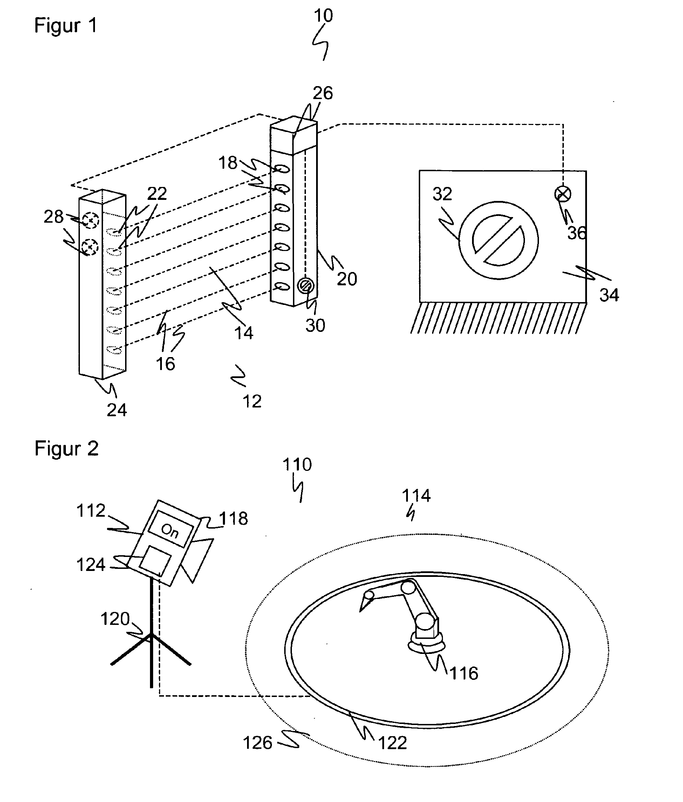

Figur 1 zeigt dass ein nicht-erfindungsgemäßes Beispiel das nicht in den Schutzbereich der Ansprüche fällt, bei welchem ein Lichtgitter 12 ein Schutzfeld 14 durch mehrere zueinander parallele Lichtstrahlen 16 aufspannt, welche durch die Lichtsender 18 einer ersten Säule 20 und Lichtempfänger 22 einer zweiten Säule 24 des Lichtgitters 12 erzeugt werden.

Hinter dem Lichtsender 12 könnte sich beispielsweise eine gefährliche Maschine, wie eine Abkantpresse oder ein Roboter befinden, in deren Einflussbereich Bedienpersonal zur Vermeidung von Verletzungen nicht kommen darf. Wird einer der Lichtstrahlen 16 unterbrochen, so erkennt dies eine Auswertungseinheit 26 und erzeugt über einen nicht dargestellten Sicherheitsausgang einen Befehl an die Maschine, welcher sie abschaltet oder in eine sichere Position bringt. Damit diese Absicherung unter allen Umständen erfolgen kann, ist die Auswertungseinheit 26 und der Sicherheitsausgang durch zweikanalige Ausführung oder Selbsttests sicher ausgelegt.

Die erste Säule 20 und die zweite Säule 24 des Lichtgitters 12 können untereinander eine elektrische oder drahtlose Verbindung aufweisen, damit die Auswertungseinheit 26 auch Elemente der zweiten Säule 24 ansteuern kann. Das Lichtgitter 12 weist Anzeigeelemente 28, beispielsweise LEDs auf, um einen Status anzuzeigen.

Eine Warnanzeige 30 ist mit der Auswertungseinheit 26 verbunden und kann auf diese Weise aktiviert und deaktiviert werden. Die Warnanzeige 30 besteht aus einer elektrolumineszierenden Leuchtfolie, welche also durch Anlegen einer Spannung von der Auswertungseinheit 26 zum Leuchten gebracht werden kann. Die Leuchtfolie kann ab Werk in der benötigten Form zurecht geschnitten sein, oder sie wird aus einer Grundfläche bei der Montage zurecht geschnitten und auf das Gehäuse des Lichtgitters 12 geklebt oder dort in anderer Weise befestigt. Zur vereinfachten Anbringung kann die Leuchtfolie mit einer Klebeschicht versehen sein.

Die Bedeutung der aktiven Warnanzeige 30 kann beispielsweise darin liegen, dass die durch das Lichtgitter 12 geschützte Maschine bei leuchtender Warnanzeige 30 aktiv ist. Die Warnanzeige 30 kann auch in einer Blinksequenz aktiviert werden, um noch stärker aufzufallen.

Eine zweite Warnanzeige 32 ist in einigem Abstand an einer Wand 34 angebracht. Im Gegensatz zu der ersten Warnanzeige 30 besteht die zweite Warnanzeige 32 aus einem photoluminesszierenden Material. Durch eine mit der Auswertungseinheit 26 verbundenen Lampe 36, vorzugsweise mit einer Abstrahlung im UV-Bereich, jedenfalls aber abgestimmt auf eine Anregungsfrequenz der photolumineszierenden Folie, kann die zweite Warnanzeige 34 zum Leuchten gebracht werden. Dies kann gleichzeitig mit, aber auch unabhängig von der ersten Warnanzeige 30 geschehen und denselben oder einen anderen Status des Lichtgitters 12 anzeigen. Die Warnanzeige 32 ist auch von Standpunkten gut sichtbar, wo das Lichtgitter 12 und dessen Warnanzeige 30 bzw. dessen LEDs 28 nicht gesehen werden können.

Es versteht sich von selbst, dass beide Warnanzeigen 30, 32 in weiteren Beispielen unabhängig vom Ort ihrer Anbringung nach Bedarf aus elektrolumineszierendem oder photoluminesszierendem Material gebildet werden können.

Die Ansteuerungsleitung der Warnanzeige 30 bzw. der Lampe 36 kann eine drahtgebundene direkte, serielle oder Ethernetverbindung sein. Wegen des geringeren Aufwands und der Vermeidung störender Leitungen kann alternativ eine drahtlose Kommunikationsschnittstelle der Auswertungseinheit 26 mit einer Spannungsversorgung an der elektrolumineszierenden Folie der Warnanzeige 30 beziehungsweise der Lampe 36 verbunden sein. Dann muss jeweils eine lokale Energieversorgung in Form eines Anschlusses, einer Batterie oder eines Akkus vorhanden sein, welche im Falle der drahtgebunden Anbindung von der Auswertungseinheit 26 geleistet werden kann.

Figur 2 zeigt eine erste Ausführungsform der erfindungsgemäßen Vorrichtung 110 mit einer zweidimensionalen Sicherheitskamera 112, welche den Arbeitsbereich 114 eines Roboters 116 überwacht. Die Sicherheitskamera 112 besitzt ein eigenes Anzeigenelement 118 in Form eines Displays, auf dem in Figur 2 ein beispielhafter Zustand angezeigt wird ("On"). Die Anbringung der Sicherheitskamera 112 ist schematisch durch ein Stativ 120 dargestellt, sie könnte aber ebenso gut eine mobile Kamera sein.

Eine Leuchtfolie 122 ist an der Grenze eines Schutzbereiches angebracht, in den wegen der Bewegungen des Roboters 116 nicht eingegriffen werden darf. Diese Leuchtfolie 22 aus elektrolumineszierendem Material kann von der Sicherheitskamera 112 angesteuert und zum Leuchten gebracht werden.

Die Sicherheitskamera 112 beziehungsweise ihre Auswertungseinheit 124 erkennt nicht nur Eingriffe in den Schutzbereich, welche zu einer sicherheitsgerichteten Abschaltung führen, sondern auch in einen vorgelagerten Warnbereich 126, welcher den Schutzbereich umgibt und in Figur 2 durch eine gepunktete, also nur virtuelle Linie dargestellt ist. Zur Erleichterung der Auswertung kann diese virtuelle Linie auch mit einem Kontrastmuster oder einer weiteren Leuchtfolie versehen werden.

Bei einem solchen Eingriff in den Warnbereich 126 aktiviert die Auswertungseinheit 124 die Leuchtfolie 122, um Personen davor zu warnen, den Schutzbereich zu betreten und dadurch Ausfallzeiten durch eine sicherheitsgerichtete Abschaltung zu verursachen.

Um Gewöhnungseffekten entgegenzuwirken, kann statt einer einfachen Aktivierung der Leuchtfolie 122 eine komplexere optische Warnung ausgegeben werden. Diese kann die Form einer Blinksequenz, eines Farbwechsels bis hin zu einem dynamischen Farbspiel oder einer Kombination annehmen. Die Leuchtfolie 122 kann auch mehrere elektrisch einzeln ansteuerbare Segmente aufweisen, wodurch die Auswertungseinheit 124 auch ein Muster erzeugen kann. Kombiniert man etwa ein solches Muster mit einer Blinksequenz, so kann der Eindruck einer umlaufenden Barriere oder einer anderen warnenden Bewegung vermittelt werden. Benutzer werden dadurch wirkungsvoll dazu angehalten, den Warnbereich 126 rasch wieder zu verlassen und den Schutzbereich unverletzt zu lassen. Dies umso mehr, als die Sicherheitskamera 122 die Warnung und das weitere Verhalten der eingedrungenen Person aufzeichnen könnte, um das nicht vorschriftsgemäße Verhalten zu dokumentieren.

Das Warnfeld 126 und das von der Leuchtfolie 122 begrenzte Schutzfeld kann, beispielsweise per angeschlossenem Computer oder einem Bedienelement der Kamera 112, von einem Benutzer konfiguriert werden. Die Kamera 112 kann aber auch in einem besonderen Modus die Grenzen des Schutzfeldes selber durch Aktivierung der im Kamerabild dann gut erkennbaren Leuchtfolie 122 einlernen. Das Schutzfeld kann so auf einfache Weise durch Abkleben der Grenze mit der Leuchtfolie 122 konfiguriert werden.

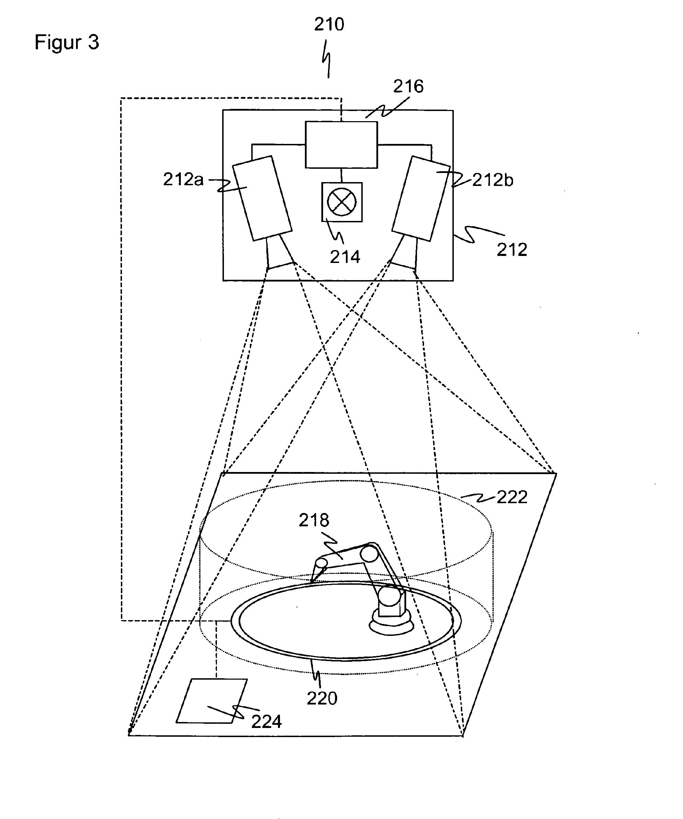

In Figur 3 ist eine zweite Ausführungsform der erfindungsgemäßen Vorrichtung 210 dasgestellt. Diese Ausführungsform unterscheidet sich von der ersten Ausführungsform darin, dass die hier verwendete Sicherheitskamera 212 eine dreidimensionale Stereokamera ist, welche zwei Kameramodule 212a und 212b, eine aktive Beleuchtung 214 und eine Auswertungseinheit 216 aufweist und einen Roboter 218 aus der Vogelperspektive überwacht. Auch hier wird ein Schutzfeld von einer Leuchtfolie 220 begrenzt, welches aufgrund der 3D-Aufnahme ein dreidimensionaler Schutzraum sein kann. Ein umgebendes Warnfeld 222 ist hier beispielhaft Teil eines Zylindermantels. Die Überwachung, insbesondere die Funktion der Leuchtfolie 220, ist ganz analog der zweiten Ausführungsform.

Zusätzlich ist noch ein weiteres Leuchtfolienelement 224 vorgesehen, welches auf dem Boden angebracht ist. Dadurch können zusätzlich zu einem optischen Kenntlichmachen mittels der Leuchtfolie 220, wenn in das Warnfeld 222 eingegriffen wird, noch weitere Status der 3D-Kamera 212 angezeigt werden. Eine Anzeige an der Kamera 212 selbst wäre wegen deren Anbringung an der Decke sogar dann noch schlecht zu erkennen, wenn Bedienpersonal überhaupt den Blick dorthin richtet.

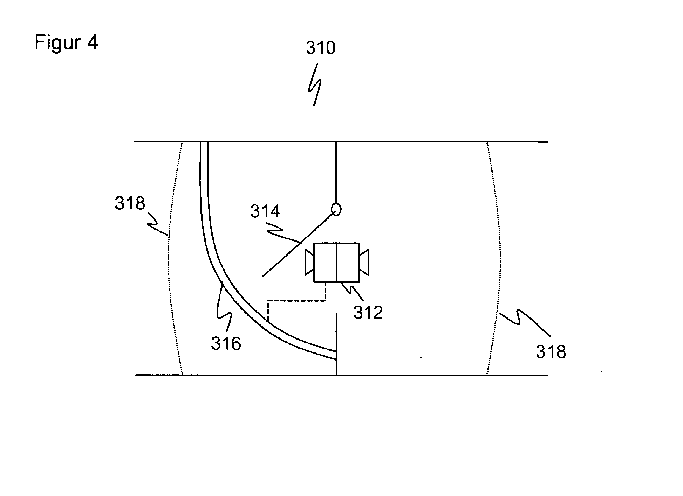

Figur 4 zeigt eine dritte Ausführungsform 310 der erfindungsgemäßen Vorrichtung mit einem Bewegungsmelder 312 an einer Tür 314, welche sich automatisch öffnet und schließt. Anstelle eines Bewegungsmelders 312 könnte eine Kamera oder ein Laserscanner eingesetzt werden. Ein zu schützender Bereich ist hier derjenige, in den die Tür 314 aufschwingt. An der Grenze dieses Schutzbereichs ist eine Leuchtfolie 316 angebracht, welche von dem Bewegungsmelder 312 aktiviert wird, wenn sich jemand der Tür 314 nähert, wobei das Kriterium beispielsweise die Überschreitung der Grenzen eines Warnbereichs 318 sein könnte. Ansonsten ist auch die Funktionsweise der dritten Ausführungsform derjenigen der ersten Ausführungsform analog.

Die im Zusammenhang mit der ersten bis dritten Ausführungsform beschriebenen Sensoren sind jeweils nur exemplarisch zu verstehen. Die Erfindung ist für jegliche Art von optischen Sensoren anwendbar, also Lichtgitter, Laserscanner, Sicherheitskameras einschließlich dreidimensionaler Sicherheitskameras, wie Lichtlaufzeitkameras oder Stereokameras, aber auch mit nicht optischen Prinzipien arbeitende, beispielsweise kapazitive, Mikrowellen- oder Radarsensoren und schließlich über berührungslos wirkende Sensoren oder Schutzeinrichtungen hinaus auch auf Berührung reagierende Sensoren wie Schaltmatten oder kapazitive Berührungssensoren.

Ebenso sind die Informationen, welche über eine Leuchtfolie ausgegeben werden können, nicht auf Warnungen oder Begrenzungen von Schutzfeldern beschränkt. So sind viele weitere Status denkbar, etwa "Ein", "Aktiv", "Lichtweg frei", "Lichtweg unterbrochen", "Warnbereich verletzt", "Schutzbereich verletzt", "Annäherung eines Objekts", "Warten auf Takt" oder "Wartung erforderlich". Es können auch Messdaten ausgegeben werden, soweit das durch die beschriebenen Farben, Muster oder zeitlichen Codierungen durch Blinksequenzen handhabbar ist. Die verschiedenen Anzeigen können in ihrer Warnehmbarkeit und Auffälligkeit anhand ihrer Wichtigkeit gestaffelt werden. So würde beispielsweise eine dringende Wartungsanforderung durch großflächiges, rotes Blinken angezeigt, ein Status wie "alles OK" hingegen durch Ausschalten oder ein ruhiges, wenig auffälliges Leuchten dargestellt.

Schließlich dürfen die einzelnen Ausführungsformen nicht ausschließend verstanden werden, sondern die Merkmale können untereinander kombiniert werden. Die verschiedenen auszugebenden Informationen, die Art der Aktivierung der Leuchtfolie, ihre Montage und das Zurechtschneiden, die Anbindung an eine Steuerung per drahtloser Schnittstelle und weitere Merkmale sind nicht auf den jeweils zu einer Ausführungsform beschriebenen Sensor beschränkt, sondern lassen sich je nach Bedarf der Anwendung auf weitere Sensoren übertragen.

## Patentansprüche

1. Sicherheitssensor (112, 212, 312) zur Überwachung mit einem Sensorelement (112, 212, 312) zur Erkennung eines Eingriffs in einen Überwachungsbereich, einem Anzeigeelement (122, 220, 316) für die Anzeige einer Statusinformation sowie mit einer aktiven oder aktivierbaren Leuchtfolie, wobei die Leuchtfolie das Anzeigeelement (122, 220, 316) bildet und die Aktivität der Leuchtfolie von dem Sensorelement (112, 212, 312) steuerbar ist, wobei der Sicherheitssensor (112, 212, 312) dafür ausgebildet ist, Eingriffe in einen Schutzbereich, in dem eine abzusichernde Gefahrenquelle angeordnet ist, zu erkennen und bei Erkennung eines solchen Eingriffs eine sicherheitsgerichtete Abschaltung auszulösen und als Statusinformation die Verletzung eines definierten, dem Schutzbereich vorgelagerten Warnfeldes (126, 222, 318) zu erkennen und auszugeben, um Personen davor zu warnen, in den Schutzbereich einzugreifen, wobei die Leuchtfolie (122, 220, 316) an einer Grenze des Schutzbereichs angebracht ist.

2. Sicherheitssensor (112, 212, 312) nach Anspruch 1,
wobei die Leuchtfolie (122, 220, 316) dafür ausgebildet ist, unabhängig vom Ort des Sensorelements (112, 212, 312) angebracht zu werden, insbesondere mit einer Klebeschicht versehen ist.

3. Sicherheitssensor (112, 212, 312) nach Anspruch 1 oder 2, wobei das Sensorelement (112, 212, 312) eine Sensorschnittstelle zur Ansteuerung der Leuchtfolie (122, 220, 316) und die Leuchtfolie (122, 220, 316) eine Leuchtfolienschnittstelle zum Empfang einer Ansteuerung von dem Sensorelement (112, 212, 312) aufweist, wobei die Schnittstellen Ein- und Ausgänge für eine direkte Verbindung oder Schnittstellen für eine drahtlose Kommunikation sind, insbesondere nach dem Bluetooth-, Firewire-, GSM-, WLAN- oder UMTS-Standard.

4. Sicherheitssensor (112, 212, 312) nach einem der vorhergehenden Ansprüche, wobei die Leuchtfolie (122, 220, 316) elektrolumineszierendes Material aufweist, oder wobei die Leuchtfolie photolumineszierendes Material aufweist, insbesondere UV-aktivierbar, und wobei die Vorrichtung eine Lichtquelle zur Aktivierung der Photolumineszenz aufweist.

5. Sicherheitssensor (112, 212, 312) nach einem der vorhergehenden Ansprüche, wobei eine Auswertungseinheit (124, 216) des Sensorelements (112, 212, 312) dafür ausgebildet ist, die Statusinformation über die Leuchtfolie (122, 220, 316) durch deren partielle oder vollständige Aktivierung, Deaktivierung oder einen Farbwechsel auszugeben.

6. Sicherheitssensor (112, 212, 312) nach Anspruch 5, wobei die Auswertungseinheit (124, 216) insbesondere für eine eindringlichere Ausgabe der Statusinformation dafür ausgebildet ist, die Leuchtfolie (122, 220, 316) dynamisch zu aktivieren, insbesondere durch eine Blinksequenz, mehrere Farbwechsel und/oder Erzeugung wechselnder Muster mittels Aktivierung von Teilbereichen oder mehreren Leuchtfolien (122, 220, 316).

7. Sicherheitssensor (112, 212, 312) nach einem der vorhergehenden Ansprüche, wobei der Sicherheitssensor (110, 210, 310) zusätzlich zu der Leuchtfolie (122, 220, 316) mindestens ein weiteres Anzeigeelement (118, 224) aufweist, über welches redundant oder alternativ Statusinformationen und/oder Messwerte ausgegeben werden können.

8. Sicherheitssensor (112, 212, 312) nach einem der vorhergehenden Ansprüche, der eine insbesondere optische oder optoelektronische berührungslos wirkende Schutzeinrichtung wie ein Lichtgitter, ein Laserscanner (312) oder eine Sicherheitskamera (112, 212) ist.

9. Sicherheitsverfahren zur Erkennung eines Eingriffs in einen Überwachungsbereich mit einem Sensorelement (112, 212, 312), wobei eine Statusinformation über eine als Anzeigeelement (122, 220, 316) ausgebildete aktive oder aktivierbare Leuchtfolie (122, 220, 316) angezeigt wird, deren Aktivität von dem Sensorelement (112, 212, 312) gesteuert wird, wobei Eingriffe in einen Schutzbereich, in dem eine abzusichernde Gefahrenquelle angeordnet ist, erkannt und bei Erkennung eines solchen Eingriffs eine sicherheitsgerichtete Abschaltung ausgelöst wird und wobei als Statusinformation die Verletzung eines definierten, dem Schutzbereich vorgelagerten Warnfeldes (126, 222, 318) erkannt und ausgegeben wird, um Personen davor zu warnen, in den Schutzbereich einzugreifen, wobei die Leuchtfolie (122, 220, 316) an einer Grenze des Schutzbereichs angebracht wird.

10. Verfahren nach Anspruch 9,
wobei die Statusinformation drahtlos von dem Sensor-element (112, 212, 312) zu der Leuchtfolie (122, 220, 316) übertragen wird, insbesondere nach dem Bluetooth-, Firewire-, GSM-, WLAN- oder UMTS-Standard.

11. Verfahren nach Anspruch 9 oder 10,
wobei die Statusinformation durch eine partielle oder vollständige Aktivierung, Deaktivierung oder einen Farbwechsel der Leuchtfolie (122, 220, 316) ausgegeben wird und wobei insbesondere für eine eindringlichere Ausgabe der Statusinformation und/oder des Messwerts die Leuchtfolie (122, 220, 316) dynamisch aktiviert wird, insbesondere durch eine Blinksequenz, mehrere Farbwechsel und/oder Erzeugung wechselnder Muster mittels Aktivierung von Teilbereichen oder mehreren Leuchtfolien (122, 220, 316).

12. Verfahren zur Herstellung eines Sicherheitssensors (110, 210, 310) nach einem der Ansprüche 1 bis 8, wobei ein Sensorelement (112, 212, 312), das dafür ausgebildet ist, Eingriffe in einen Schutzbereich, in dem eine abzusichernde Gefahrenquelle angeordnet ist, zu erkennen und bei Erkennung eines solchen Eingriffs eine sicherheitsgerichtete Abschaltung auszulösen sowie als Statusinformation die Verletzung eines definierten, dem Schutzbereich vorgelagerten Warnfeldes (126, 222, 318) zu erkennen und auszugeben, derart an einem Überwachungsbereich angeordnet wird, dass Eingriffe in den Überwachungsbereich erkannt werden können, eine Leuchtfolie (122, 220, 316) als Anzeigeelement (122, 220, 316) für die Anzeige einer Statusinformation an einer Grenze des Schutzbereichs des angebracht oder aufgeklebt wird, und wobei eine drahtgebundene oder drahtlose Verbindung zwischen dem Sensorelement (112, 212, 312) und der Leuchtfolie (122, 220, 316) geschaffen wird.

13. Verfahren nach Anspruch 12,
wobei eine Leuchtfolie (122, 220, 316) verwendet wird, die elektrolumineszierendes Material aufweist, und wobei die Verbindung von dem Sensorelement (112, 212, 312) zu der Leuchtfolie (122, 220, 316) selbst geschaffen wird, oder wobei eine Leuchtfolie verwendet wird, die photolumineszierendes Material aufweist, insbesondere UV-aktivierbar, und wobei eine Lichtquelle , welche die Photolumineszenz aktivieren kann, derart angebracht wird, dass sie die Leuchtfolie beleuchten kann und die Verbindung von dem Sensorelement (112, 212, 312) zu der Lichtquelle geschaffen wird.

## Claims

1. A safety sensor (112, 212, 312) for monitoring with a sensor element (112, 212, 312) for the detection of an intrusion into a monitored area, the sensor having a display element (122, 220, 316) for displaying a status information and an active or activatable luminescent sheet, wherein the luminescent sheet constitutes the display element (122, 220, 316) and the activity of the luminescent sheet is controllable by the sensor element (112, 212, 312), wherein the safety sensor (112, 212, 312) is configured to detect intrusions into a protected area in which a danger source to be protected is located, to trigger a safety related shut-off upon detection of such intrusion and to detect and output as a status information the violation of a defined warning field (126, 222, 318) arranged in front of the protected area in order to warn persons against intruding into the protected area, wherein the luminescent sheet (122, 220, 316) is arranged at a border of the protected area.

2. The safety sensor (112, 212, 312) according to claim 1,
wherein the luminescent sheet (122, 220, 316) is configured to be arranged independent of the position of the sensor element (112, 212, 312), in particular is provided with an adhesive layer.

3. The safety sensor (112, 212, 312) according to claim 1 or 2,
wherein the sensor element (112, 212, 312) comprises a sensor interface for controlling the luminescent sheet (122, 220, 316) and the luminescent sheet (122, 220, 316) comprises a luminescent sheet interface for receiving a control form the sensor element (112, 212, 312), wherein the interfaces are inputs and outputs for a direct link or interfaces for a wireless communication, in particular according the Bluetooth, Firewire, GSM, wLAN, or UMTS standard.

4. The safety sensor (112, 212, 312) according to any of the preceding claims,
wherein the luminescent sheet (122, 220, 316) comprises electroluminescent material, or wherein the luminescent sheet (122, 220, 316) comprises photoluminescent material, in particular activatable by UV light, and wherein the apparatus comprises a light source for the activation of the photoluminescence.

5. The safety sensor (112, 212, 312) according to any of the preceding claims,
wherein an evaluation unit (124, 216) of the sensor element (112, 212, 312) is configure to output the status information via the luminescent sheet (122, 220, 316) by its partial or a complete activation, deactivation or a change in color.

6. The safety sensor (112, 212, 312) according to claim 5,
wherein the evaluation unit (124, 216), in particular for a more insistent output of the status information, is configured to dynamically activate the luminescent sheet (122, 220, 316), in particular by a blinking sequence, multiple changes in color and/or generating altering patterns by activating partial areas or multiple luminescent sheets (122, 220, 316).

7. The safety sensor (112, 212, 312) according to any of the preceding claims,
wherein the safety sensor (110, 210, 310) comprises, in addition to the luminescent sheet (122, 220, 316), another display element (118, 224) via which status information and/or measured valued can be redundantly or alternatively be output.

8. The safety sensor (112, 212, 312) according to any of the preceding claims, that is made as a contactless protecting device, in particular an optical or opto-electronical device, such as a light grid, a laser scanner (312) or a safety camera (112, 212).

9. A safety method for the detection of an intrusion into a monitored area with a sensor element (112, 212, 312), wherein a status information is displayed via an active or activatable luminescent sheet (122, 220, 316) configured as a display element (122, 220, 316) whose activity is controlled by the sensor element (112, 212, 312), wherein intrusions into a protected area are detected in which a danger source to be protected is located and a safety related shut-off is triggered upon detection of such intrusion, and wherein the violation of a defined warning field (126, 222, 318) arranged in front of the protected area is detected and output as a status information in order to warn persons against intruding into the protected area, wherein the luminescent sheet (122, 220, 316) is arranged at a border of the protected area.

10. The method according to claim 9,
wherein the status information is wirelessly communicated from the sensor element (112, 212, 312) to the luminescent sheet (122, 220, 316), in particular according the Bluetooth, Firewire, GSM, wLAN, or UMTS standard.

11. The method according to claim 9 or 10,
wherein the status information is output by a partial or a complete activation, deactivation or a change in color of the luminescent sheet (122, 220, 316), and wherein in particular for a more insistent output of the status information and/or a measured value the luminescent sheet (122, 220, 316) is activated dynamically, in particular by a blinking sequence, multiple changes in color and/or generating altering patterns by activating partial areas or multiple luminescent sheets (122, 220, 316).

12. A method of manufacturing a safety sensor (110, 210, 310) according to any of claims 1 to 8, wherein a sensor element (112, 212, 312), that is configured to detect intrusions into a protected area in which a danger source to be protected is located and to trigger a safety related shut-off when detecting such intrusion as well as to detect and output the violation of a defined warning field (126, 222, 318) arranged in front of the protected area as a status information, is arranged at a monitored area such that intrusions into the monitored area can be detected, a luminescent sheet (122, 220, 316) as a display element (122, 220, 316) for displaying a status information is arranged or affixed at a border of the protected area, and wherein a wired or wireless connection is made between the sensor element (112, 212, 312) and the luminescent sheet (122, 220, 316).

13. The method according to claim 12,
wherein a luminescent sheet (122, 220, 316) is used that comprises electroluminescent material, and wherein the connection is made from the sensor element (112, 212, 312) to the luminescent sheet (122, 220, 316) itself, or wherein a luminescent sheet is used that comprises photoluminescent material, in particular acvitatable by UV light, and wherein a light source capable of activating the photoluminescence is arranged such that it can illuminate the luminescent sheet and the connection is made from the sensor element (112, 212, 312) to the light source.

## Revendications

1. Détecteur de sécurité (112, 212, 312) pour la surveillance avec un élément capteur (112, 212, 312) pour reconnaître une intervention dans une zone de surveillance, un élément d'affichage (120, 220, 316) pour l'affichage d'une information d'état, ainsi qu'avec un film luminescent actif ou susceptible d'être activé, dans lequel le film luminescent forme l'élément d'affichage (122, 220, 316) et l'activité du film luminescent peut être commandée par l'élément capteur (112, 212, 312), le détecteur de sécurité (112, 212, 312) étant réalisé pour reconnaître des interventions dans une zone protégée dans laquelle est agencée une source de danger qu'il s'agit de sécuriser et, lors d'une reconnaissance d'une telle intervention, pour déclencher une coupure à des fins de sécurité et reconnaître et délivrer à titre d'information d'état la violation d'un champ d'avertissement défini (126, 222, 318) placé en avant de la zone protégée, afin d'avertir des personnes qui voudraient intervenir dans la zone protégée, et le film luminescent (122, 220, 316) est appliqué à une frontière de la zone protégée.

2. Détecteur de sécurité (112, 212, 312) selon la revendication 1,
dans lequel le film luminescent (122, 220, 316) est réalisé pour être appliqué indépendamment du lieu de l'élément capteur (112, 212, 312), et est en particulier doté d'une couche de colle.

3. Détecteur de sécurité (112, 212, 312) selon la revendication 1 ou 2,
dans lequel l'élément capteur (112, 212, 312) comprend une interface de capteur pour piloter le film luminescent (122, 220, 316), et le film luminescent (122, 220, 316) comprend une interface de film luminescent pour la réception d'un pilotage de la part de l'élément capteur (112, 212, 312), lesdites interfaces étant des entrées et des sorties pour une connexion directe, ou des interfaces pour une communication sans fil, en particulier selon le standard Bluetooth, FireWire, GSM, W-LAN ou UMTS.

4. Détecteur de sécurité (112, 212, 312) selon l'une des revendications précédentes,
dans lequel le film luminescent (22, 220, 316) comprend un matériau électroluminescent, ou dans lequel le film luminescent comprend un matériau photoluminescent, en particulier susceptible d'être activé par des rayons ultraviolets, et dans lequel le dispositif comprend une source de lumière pour activer la photoluminescence.

5. Détecteur de sécurité (112, 212, 312) selon l'une des revendications précédentes,
dans lequel une unité d'évaluation (124, 216) de l'élément capteur (112, 212, 312) est réalisée pour donner les informations d'état via le film luminescent (122, 220, 316) par son activation partielle ou totale, sa désactivation ou encore un changement de couleur.

6. Détecteur de sécurité (112, 212, 312) selon la revendication 5,
dans lequel l'unité d'évaluation (124, 216) est réalisée, en particulier afin de fournir les informations d'état de manière plus insistante, pour activer le film luminescent (122, 220, 316) de façon dynamique, en particulier par une séquence de clignotement, par plusieurs changements de couleur et/ou par génération de motifs changeants, au moyen de l'activation de zones partielles ou de plusieurs films luminescents (122, 220, 316).

7. Détecteur de sécurité (112, 212, 312) selon l'une des revendications précédentes,
dans lequel le détecteur de sécurité (110, 210, 310) comprend, additionnellement au film luminescent (122, 220, 316), au moins un autre élément d'affichage (118, 224), au moyen duquel des informations d'état et/ou des valeurs de mesure peuvent être fournies de manière redondante ou alternative.

8. Détecteur de sécurité (112, 212, 312) selon l'une des revendications précédentes, qui est un système de protection agissant sans contact, en particulier par voie optique ou optoélectronique, comme une grille lumineuse, un scanner à laser (312) ou une caméra de sécurité (112, 212).

9. Procédé de sécurisation pour reconnaître une intervention dans une zone de surveillance avec un élément capteur (112, 212, 312), dans lequel une information d'état est affichée via un film luminescent (122, 220, 316) actif ou susceptible d'être activé, réalisé à titre d'élément d'affichage (122, 220, 316), dont l'activité est pilotée par l'élément capteur (112, 212, 312), dans lequel des interventions dans une zone de protection dans laquelle est agencée une source de danger qu'il s'agit de sécuriser, sont reconnues et, lors d'une reconnaissance d'une telle intervention, une coupure à des fins de sécurité est déclenchée, et dans lequel on reconnaît et on affiche à titre d'état d'information la violation d'un champ d'avertissement (126, 222, 318) défini, placé en avant de la zone protégée, afin d'avertir des personnes qui voudraient intervenir dans la zone protégée, dans lequel le film luminescent (122, 220, 316) est appliqué à une frontière de la zone protégée.

10. Procédé selon la revendication 9,
dans lequel les informations d'état sont transmises sans fil depuis l'élément capteur (112, 212, 312) au film luminescent (122, 220, 316), en particulier selon le standard Bluetooth, FireWire, GSM, W-LAN ou UMTS.

11. Procédé selon la revendication 9 ou 10,
dans lequel les informations d'état sont fournies par une activation partielle ou totale, par une désactivation ou encore par un changement de couleur du film luminescent (122, 220, 316) et dans lequel, en particulier pour fournir les informations d'état et/ou la valeur de mesure d'une manière plus insistante, le film luminescent (122, 220, 316) est activé de façon dynamique, en particulier par une séquence de clignotement, plusieurs changements de couleur et/ou génération de motifs changeants, au moyen de l'activation de zones partielles ou de plusieurs films luminescents (122, 220, 316).

12. Procédé pour la fabrication d'un détecteur de sécurité (110, 210, 310) selon l'une des revendications 1 à 8, dans lequel un élément capteur (112, 212, 312), qui est réalisé pour reconnaître des interventions dans une zone protégée dans laquelle est agencée une source de danger qu'il s'agit de sécuriser et, en cas de reconnaissance d'une telle intervention, pour déclencher une coupure à des fins de sécurité, et pour reconnaître et fournir à titre d'information d'état la violation d'un champ d'avertissement défini (126, 222, 318) placé en avant de la zone protégée, est agencé de telle façon au niveau d'une zone de surveillance que des interventions dans la zone de surveillance peuvent être reconnues, un film luminescent (122, 220, 316) est appliqué ou collé au niveau d'une frontière de la zone protégée à titre d'élément d'affichage (122, 220, 316) pour l'affichage d'une information d'état, et dans lequel une liaison filaire ou sans fil est établie entre l'élément capteur (112, 212, 312) et le film luminescent (122, 220, 316).

13. Procédé selon la revendication 12,
dans lequel on utilise un film luminescent (122, 220, 316) qui comprend un matériau électroluminescent, et dans lequel la liaison de l'élément capteur (112, 212, 312) est établie vers le film luminescent (122, 220, 316) lui-même, ou dans lequel on utilise un film luminescent qui comprend un matériau photoluminescent, en particulier susceptible d'être activé par des rayons ultraviolets, et dans lequel une source de lumière, capable d'activer la photoluminescence, est montée de telle façon qu'elle est capable d'éclairer le film luminescent, et la liaison est établie depuis l'élément capteur (112, 212, 312) vers la source de lumière.
